# EUROPÄISCHE PATENTANMELDUNG

(11) **EP 1 075 035 A2**
(43) Veröffentlichungstag der Anmeldung: **07.02.2001**
(21) Anmeldenummer: 00114711.5
(22) Anmeldetag: 08.07.2000
(51) Int. Cl.: H01M 8/06

(54) **Kombiniertes Bauteil zur Nachverbrennung von Anodenabgasen eines Brennstoffzellensystems und zum Verdampfen von dem Brennstoffzellensystem zuzuführenden Edukten**

(30) Priorität: 06.08.1999 DE 19937152
(71) Anmelder: XCELLSIS GmbH, 73230 Kirchheim / Teck-Nabern (DE)
(72) Erfinder: Heil, Dietmar, 88477 Schwendi (DE); Motzet, Bruno, 73235 Weilheim/Teck (DE); Schwab, Konrad, Dr., 73728 Esslingen (DE); Tischler, Alois, 94501 Aidenbach (DE); Weisser, Marc, 73277 Owen/Teck (DE)
(74) Vertreter: Kocher, Klaus-Peter Dipl.-Phys

(57) **Zusammenfassung**

Kombiniertes Bauteil zur Nachverbrennung von Anodenabgasen eines Brennstoffzellensystems und zum Verdampfen von dem Brennstoffzellensystem zuzuführenden Edukten, mit einem Abgaskatalysator zur Nachverbrennung der Anodenabgase mit einem im wesentlichen zylinderförmigen Gehäuse, mit jeweils einem koaxial zur Gehäuselängsachse auf einem Gehäusedeckel bzw. einem Gehäuseboden angeordneten Einlaß- bzw. Auslaßstutzen, mit einem ersten, koaxial zur Gehäuselängsachse angeordneten, gasdurchlässigen inneren Rohr, welches auf der Gaseinlaßseite fest mit dem Gehäusedeckel verbunden ist, mit einem zweiten, koaxial zur Gehäuselängsachse angeordneten gasdurchlässigen äußeren Rohr, welches einen Radius r_{A} größer als der Radius r_{I} des inneren Rohres, jedoch kleiner als der Radius r_{G} des Gehäuses aufweist, und welches auf der Einlaßseite gasdicht mit dem Gehäusedeckel verbunden ist, und mit einer Katalysatorschüttung im Bereich zwischen dem inneren und dem äußeren Rohr zur katalytischen Oxidation des Anodenabgases, wobei in dem Bereich zwischen dem inneren Rohr und dem äußeren Rohr ein Verdampfer zum Verdampfen wenigstens eines dem Brennstoffzellensystems zuzuführenden Eduktes vorgesehen ist, wobei Rohre des Verdampfers, durch welche das zu verdampfende Edukt strömt, um das innere Rohr des Abgaskatalysators herumgeführt sind.

## Beschreibung

Die vorliegende Erfindung betrifft ein kombiniertes Bauteil zur Nachverbrennung von Anodenabgasen eines Brennstoffzellensystems und zum Verdampfen von dem Brennstoffzellensystem zuzuführenden Edukten nach dem Oberbegriff des Patentanspruchs 1.

Aus der US 5 229 222 ist ein Brennstoffzellensystem bekannt, bei dem das Anodenabgas der Brennstoffzelle mit Hilfe eines Abgaskatalysators vor der Abgabe an die Umgebung nachbehandelt wird.

Bei wasserstoffbetriebenen Brennstoffzellensystemen ist es ferner üblich, den der Brennstoffzelle zuzuführenden Wasserstoff mittels einer Kohlenwasserstoffreformierung zu erzeugen. Zu diesem Zwecke werden ein geeigneter Kohlenwasserstoff, beispielsweise Methanol und Wasser zunächst einem Verdampfer zugeführt und anschließend in einem Reaktor reformiert.

Der erwähnte Abgaskatalysator zur Nachverbrennung von Anodenabgasen von Brennstoffzellensystemen sowie der erwähnte Verdampfer wurden bei herkömmlichen Brennstoffzellensystemen stets als getrennte Bauteile bereitgestellt. Hierdurch war der Platzbedarf sowie das Gesamtgewicht dieser beiden Bauteile relativ groß, was sich insbesondere für mobile Anwendungen (Automobilbereich) als nachteilig erweist.

In der US 5,840,437 ist es zur Ausnutzung der Abgaswärme einer Abgasnachbehandlungsstufe bekannt, die Abgase durch einen Wärmetauscher zu führen, über welchen dann beispielsweise ein Verdampfer, in welchem Wasser verdampft wird, erhitzt wird. Eine katalytische Abgasnachbehandlung ist nicht Gegenstand dieser Druckschrift.

Aufgabe der vorliegenden Erfindung ist eine möglichst unaufwendige, Kosten und Gewicht einsparende Anordnung eines Abgaskatalysators und eines Verdampfers eines Brennstoffzellensystems, insbesondere für mobile Anwendungen, bereitzustellen.

Diese Aufgabe wird gelöst durch ein kombiniertes Bauteil zur Nachverbrennung der Anodenabgase eines Brennstoffzellensystems und zum Verdampfen von dem Brennstoffzellensystem zuzuführenden Edukten mit den Merkmalen des Patentanspruchs 1. Durch die Anordnung der Rohrleitungen des Verdampfers innerhalb des Abgaskatalysators, vorteilhafterweise in direktem Kontakt mit einer in dem Abgaskatalysator vorgesehenen Katalysatorschüttung oder einer direkten Beschichtung der Rohre, kann ein optimaler Wärmeaustausch zwischen den beiden Elementen des kombinierten Bauteils erreicht werden. Insgesamt baut ein derartiges kombiniertes Bauteil wesentlich kleiner und leichter als dies bei herkömmlichen, getrennte Bauteile einsetzenden Lösungen der Fall war.

Vorteilhafte Ausgestaltungen der erfindungsgemäßen Vorrichtung sind Gegenstand der Unteransprüche.

Nach einer bevorzugten Ausführungsform des erfindungsgemäßen Bauteils umgeben die Rohrleitungen des Verdampfers das innere Rohr des Abgaskatalysators im wesentlichen spiralförmig. Mit dieser Ausgestaltung der Rohrleitungen des Verdampfers kann die thermomechanische Beanspruchung der Rohrleitungen gegenüber herkömmlichen Verdampfern in günstiger Weise kompensiert werden (Kompensation von thermischen Dehnungen durch die Spiralform). Die Formgebung kann hierbei derart gewählt werden, daß eine Anpassung des spezifischen Wärmeeintrages an den Verdampfungsprozeß möglich ist, das heißt beispielsweise können Verdampferbereiche mit hohem Wärmebedarf an Orten innerhalb des Abgaskatalysators mit entsprechend großem Energieangebot angeordnet werden.

Es erweist sich ferner als vorteilhaft, daß insbesondere im Zweiphasengebiet des Verdampfers aufgrund der wirkenden Zentrifugalkräfte, welche durch die Spiralform und die Geschwindigkeit der durch den Verdampfer strömenden Edukte verursacht sind, ein Drücken der flüssigen Phase an die Rohrwandung erfolgt. Ein Wärmeaustausch bzw. Wärmeübergang von der Rohrwandung auf die flüssige Phase erweist sich als energetisch günstiger als ein Wärmeübergang auf die gasförmige Phase.

Vorteilhafterweise sind Bereiche der Rohrleitungen des Verdampfers mit einem verringerten Querschnitt ausgebildet. Durch diese Maßnahme kann die Strömungsgeschwindigkeit der durch den Verdampfer strömenden Edukte optimal an die Wärmeübertragung des Abgaskatalysators angepaßt werden. Zweckmäßigerweise erfolgt eine Verringerung des Rohrquerschnitts insbesondere im Bereich der flüssigen Phase.

Es ist bevorzugt, daß der Querschnitt mittels in die Rohrleitung eingebrachter Einlagen bzw. Inlets vermindert ist. Derartige Einlagen können in unaufwendiger Weise an den gewünschten Stellen innerhalb der Rohrleitung eingebracht werden. Die Einlagen können beispielsweise mittig in die Rohrleitungen eingebracht werden, wodurch ein "Aufreißen" von Tropfen der flüssigen Phase der Edukte erzielbar ist, was zu einer Vergrößerung der Tropfenoberfläche führt.

Vorteilhafterweise sind die Rohrinnenwandungen und/oder Rohraußenwandungen strukturiert ausgebildet. Durch eine derartige Ausbildung, beispielsweise als Drallrohre, kann der Wärmeübergang zwischen den Abgasen und den die Rohrleitungen des Verdampfers durchströmenden Edukten weiter verbessert werden. Beispielsweise kann durch eine entsprechende Strukturierung der Innenwandungen eine Verwirbelung der flüssigen und/oder gasförmigen Phase der Edukte im Bereich der Rohrwandung erzielt werden. Durch eine entsprechende Strukturierung der Außenwandungen ist die Wärmeübertragung zwischen den Rohrleitungen und den diese umgebenden Katalysator vorteilhaft beinflussbar.

Zweckmäßigerweise sind die Außenwandungen der Rohre katalytisch beschichtet ausgebildet. Durch diese Maßnahme ist eine sehr gute Wärmebeaufschlagung eines katalytischen Materials erzielbar. Insbesondere im Falle strukturierter Innenwandungen der Rohre kann eine weiter verbesserte Wärmebeaufschlagung der katalytisch beschichteten Rohraußenwandungen gewährleistet werden. Bei gleichzeitiger Strukturierung der Rohraußenwandungen ist eine Vergrößerung der katalytisch beschichteten Fläche realisierbar.

Gemäß einer weiteren bevorzugten Ausführungsform des erfindungsgemäßen kombinierten Bauteils sind die Rohrleitungen im wesentlichen als parallel zueinander verlaufende, das innere Rohr des Abgaskatalysators im wesentlichen halbkreisförmig umgebende Einzelrohre ausgebildet, wobei die zugeführten Edukte über eine mit den Einzelrohren kommunizierende Zufuhrrohrleitung zuführbar, und die wenigstens teilweise verdampften Edukte über eine mit dem Ausgangsende der Einzelrohre kommunizierende Ausgangsrohrleitung abführbar sind. Eine derartig ausgebildete Rohrleitungsanordnung erweist sich als besonders einfach und unaufwendig in der Herstellung.

Bevorzugte Ausführungsformen des erfindungsgemäßen kombinierten Bauteils werden nun anhand der beigefügten Zeichnung weiter erläutert. Es zeigt:
- Fig. 1: eine seitliche Schnittansicht einer ersten bevorzugten Ausführungsform des erfindungsgemäßen kombinierten Bauteils,
- Fig. 2: eine Schnittansicht des kombinierten Bauteils gemäß Fig. 1 in einer Schnittansicht entlang der Linie A-A der Fig. 1,
- Fig. 3: eine der Fig. 1 entsprechende Ansicht einer zweiten bevorzugten Ausführungsform eines erfindungsgemäßen kombinierten Bauteils, und
- Fig. 4: eine der Fig. 2 entsprechende Ansicht des kombinierten Bauteils gemäß Fig. 3.

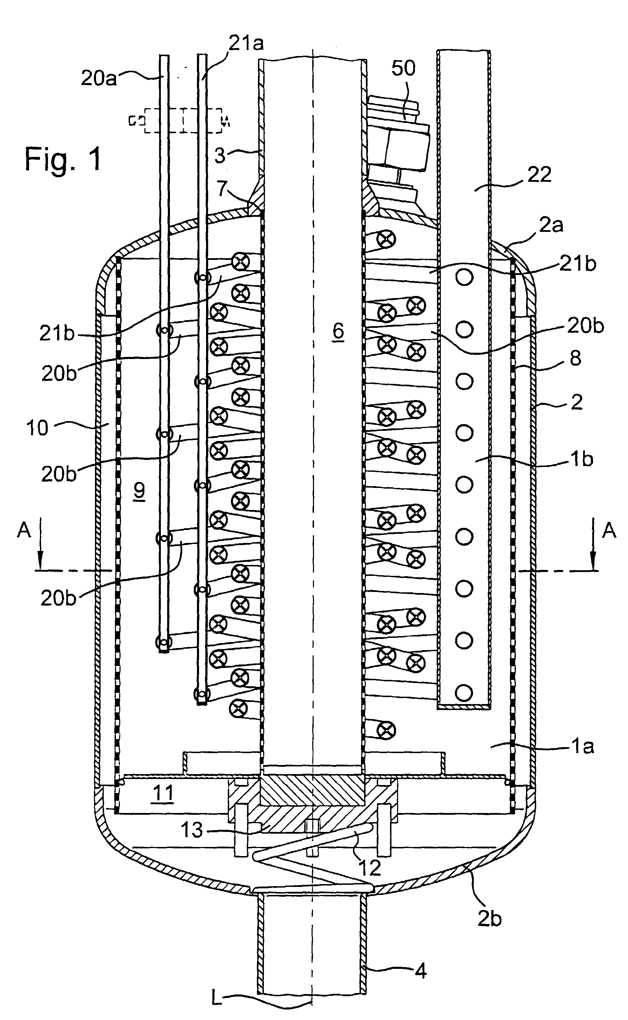

In Fig. 1 ist eine erste bevorzugte Ausführungsform des erfindungsgemäßen kombinierten Bauteils dargestellt. Das kombinierte Bauteil weist einen Abgaskatalysator, welcher insgesamt mit 1a bezeichnet ist, und einen Verdampfer, welcher insgesamt mit 1b bezeichnet ist, auf. Der Abgaskatalysator 1a weist ein zylindrisches Gehäuse 2 mit einem Gehäusedeckel 2a und einem Gehäuseboden 2b auf. Im Bereich des Gehäusedeckels 2a ist koaxial zur Gehäuselängsachse L ein Einlaßstutzen 3 angeordnet. Entsprechend ist an dem Gehäuseboden 2b ebenfalls koaxial zur Gehäuselängsachse L ein Auslaßstutzen 4 vorgesehen. Die Einlaß- bzw. Auslaßstutzen dienen zum Anschluß des Abgaskatalysators an nicht im einzelnen gezeigte Leitungen eines Brennstoffzellensystems.

Im Innern des Gehäuses 2 ist ein erstes, koaxial zur Gehäuselängsachse L angeordnetes, gasdurchlässiges inneres Rohr 6 vorgesehen. Das innere Rohr 6, welches vorzugsweise aus einem Lochblech besteht, ist auf der Gaseinlaßseite fest mit dem Gehäusedeckel 2a verbunden. Hierzu kann das innere Rohr 6 in eine entsprechende Passung 7 im Einlaßstutzen 3 eingeschraubt oder eingesteckt und anschließend verschweißt werden. Weiterhin ist ein zweites, koaxial zur Gehäuselängsachse L angeordnetes gasdurchlässiges äußeres Rohr 8 vorgesehen. Das äußere Rohr 8 ist ebenfalls auf der Einlaßseite gasdicht mit dem Gehäusedeckel 2a verbunden. Beispielsweise wird das äußere Rohr 8 mit dem Gehäusedeckel 2a verschweißt.

Das äußere Rohr 8 weist einen Radius r_{A} auf, der größer als der Radius r_{I} des inneren Rohres 6 ist. Gleichzeitig ist der Radius r_{A} des äußeren Rohres 8 aber kleiner als der Radius r_{G} des zylindrischen Gehäuses 2 (r_{I} < r_{A} < r_{G}).

Somit bildet sich zum einen zwischen dem inneren Rohr 6 und dem äußeren Rohr 8 ein innerer Ringraum 9 aus. Gleichzeitig bildet sich zwischen dem äußeren Rohr 8 und dem zylindrischen Gehäuse 2 ein äußerer Ringraum 10 aus. Vorzugsweise werden die Radien der Rohre 6 und 8 und des Gehäuses 2 derart gewählt, daß sich nur ein schmaler äußerer Ringraum 10 bildet, während der innere Ringraum 9 den größten Teil des Volumens im Gehäuse einnimmt.

Weiterhin ist ein in Richtung der Gehäuselängsachse L beweglicher, kreisförmiger Boden 11 vorgesehen, der in das äußere Rohr 8 hineinragt und dieses auf der Auslaßseite im wesentlichen dicht abschließt. Hierzu wird der Außendurchmesser des Bodens 11 im wesentlichen gleich dem Innendurchmesser des äußeren Rohres 8 gewählt. Der bewegliche Boden 11 wird mit Hilfe einer Feder 12 entgegen der Gasströmungsrichtung mit einer Kraft beaufschlagt, so daß der Boden 11 durch die Feder in Richtung Gehäusedeckel 2a gedrückt wird. Die Feder 12 ist ebenfalls koaxial zu der Gehäuselängsachse L angeordnet und stützt sich zum einen an den Gehäuseboden 2b im Bereich des Auslaßstutzens 4 ab. Zum anderen stützt sich die Feder 12 an einer Erhöhung 13 ab, die ebenfalls koaxial zur Gehäuselängsachse L auf der Unterseite des Bodens 11 vorgesehen ist. Anstelle der Feder 12 können auch andere elastische Elemente verwendet werden, die eine entsprechende Kraft auf den Boden 11 ausüben.

In den inneren Ringraum 9, der radial durch die gasdurchlässigen Rohre 6, 8 und in Richtung der Gehäuselängsachse L durch den Gehäusedeckel 2a und den Boden 11 begrenzt ist, ist der Verdampfer 1b eingebracht. Im dargestellten Ausführungsbeispiel weist der Verdampfer zwei eingangsseitig getrennte und ausgangsseitig zusammengeführte Rohrleitungssysteme auf, über welche beispielsweise zwei verschiedene Eduktgase, insbesondere Methanol und Wasser, verdampfbar sind. Das Rohrleitungssystem beispielsweise zum Verdampfen von Methanol weist ein Eingangsrohr 20a auf, von welchem spiralförmig das innere Rohr 6 umgebende Rohre 20b abzweigen. Die Rohre 20b münden in einem Ausgangsrohr 22.

Entsprechend ist für beispielsweise zu verdampfendes Wasser ein Eingangsrohr 21a vorgesehen, von dem Rohre 21b abzweigen, welche sich spiralförmig um das innere Rohr 6 des Abgaskatalysators erstrecken und ebenfalls in dem Ausgangsrohr 22 münden. Im Ausgangsrohr 22 werden also die über die Rohre 20a, 21a zugeführten Edukte vermischt.

In der in Fig. 1 dargestellten Ausführungsform erstrecken sich die Rohre 20b, 21b einmal spiralförmig um das innere Rohr 6 des Abgaskatalysators. Es ist ebenfalls denkbar, daß die Rohre 20b, 21b jeweils mehrere Windungen um das innere Rohr 6 bilden.

Der innere Ringraum 9, in welchen das dargestellte Rohrleitungssystem des Verdampfers eingebracht ist, ist ferner mit einer nicht dargestellten Katalysatorschüttung gefüllt. Hierbei handelt es sich vorzugsweise um ein edelmetallhaltiges Metall in Form von Pellets. Durch das Katalysatormaterial werden die brennbaren Bestandteile des Anodengases möglichst vollständig oxidiert. Die Größe der Pellets und der Durchmesser der Löcher in den vorzugsweise aus Lochblech ausgebildeten Rohren 6,8 wird so gewählt, daß die Pellets nicht durch das Lochblech hindurchtreten können. Gegenüber dem Gehäusedeckel 2a sind die beiden Rohre 6,8 gasdicht abgeschlossen, so daß auch hier kein Katalysatormaterial aus dem inneren Ringraum 9 austreten kann. In Richtung der Gasströmung wird der innere Ringraum schließlich von dem Boden 11 begrenzt. Dieser muß zum äußeren Rohr 8 zwar nicht gasdicht abschließen, jedoch derart ausgebildet sein, daß kein Katalysatormaterial zwischen dem äußeren Rohr 8 und dem Boden 11 hindurchtreten kann. Hierzu kann beispielsweise am äußeren Umfang des Bodens 11 ein biegsames Metallgeflecht vorgesehen sein, das bei einer Bewegung des Bodens 11 an der Innenfläche des äußeren Rohres 8 entlang streift. In der Zeichnung ist ein derartiges Drahtgeflecht aus Gründen der Übersichtlichkeit nicht dargestellt.

Ein Einfüllstutzen, mit dem Katalysatorschüttung in den inneren Ringraum 9 zwischen innerem und äußerem Rohr 6 bzw. 8 einbringbar ist, ist mit 50 bezeichnet.

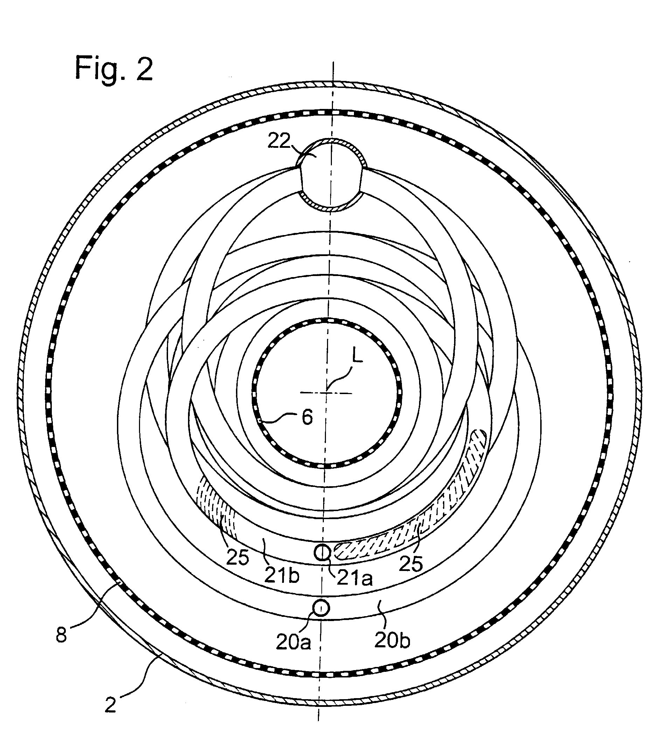

In Fig. 2 ist das Rohrleitungssystem des Verdampfers noch einmal in einer Schnittansicht entlang der Linie A-A dargestellt. Besonders gut sind hier die Übergänge zwischen den Eingangsrohren 20a, 21a und den spiralförmig ausgebildeten Rohren 20b bzw. 21b erkennbar. Man erkennt ferner, daß wie bereits erläutert, die Rohre 20b, 21b in dem Ausgangsrohr 22 münden.

In der Darstellung der Fig. 2 erkennt man, daß in Rohr 21b mittig eine Einlage 25 eingebracht ist. Eine derartige Einlage bewirkt eine Verringerung des Rohrquerschnittes und damit eine Erhöhung der Strömungsgeschwindigkeit der zu verdampfenden Edukte in diesem Bereich. Es ist möglich, derartige Einlagen 25 in weiteren Rohren vorzusehen, bzw. ihre Länge und Breite entsprechend einem gewünschten Strömungsprofil zu variieren. Als besonders günstig erweisen sich derartige Einlagen in Bereichen der flüssigen Phase der zu verdampfenden Edukte, das heißt nahe der Verbindung zwischen den Einlaßrohren 20a, 21a und den spiralförmig ausgebildeten Rohren 20b bzw. 21b.

Insbesondere im Zweiphasengebiet, in welchem sowohl flüssiges als auch bereits verdampftes Edukt vorliegt, wird durch auftretende Zentrifugalkräfte, welche durch die Spiralform der Rohre 20b, 21b sowie die Strömungsgeschwindigkeit der Edukte durch die Rohre bedingt ist, die flüssige Phase an die radial äußeren Rohrwandungen gedrückt geleitet. Hierdurch ist in besonders günstiger Weise gewährleistet, daß im Zuge der Abgasnachverbrennung in der Katalysatorschüttung entstehende Wärme optimal über die Außenseiten der Rohre 20b, 21b auf die an die Innenwand der Rohre geleitete flüssige Phase übertragen werden kann.

Durch eine Strukturierung der Innenwandungen der Rohre 20b, 21b (beispielsweise zur Realisierung von Drallrohren), welche bei 25 schematisch dargestellt ist, kann die Wärmeübertragung weiter verbessert werden. Derartige Drallrohre weisen auch eine gegenüber Rohren mit unstrukturierter Innenwandung größere Oberfläche auf, so daß bei Beschichtung der Rohraußenwandung mit katalytischem Material eine wirksamere katalytische Unterstützung der Verdampfung erfolgen kann. Es sei angemerkt, daß auch die Rohraußenwandungen zur Verbesserung der Wärmeübertragung und zur Vergrößerung einer katalytisch wirksamen Fläche strukturiert ausgebildet sein können. Diese Strukturierung bzw. katalytische Beschichtung der Rohraußenwandungen ist nicht im einzelnen dargestellt.

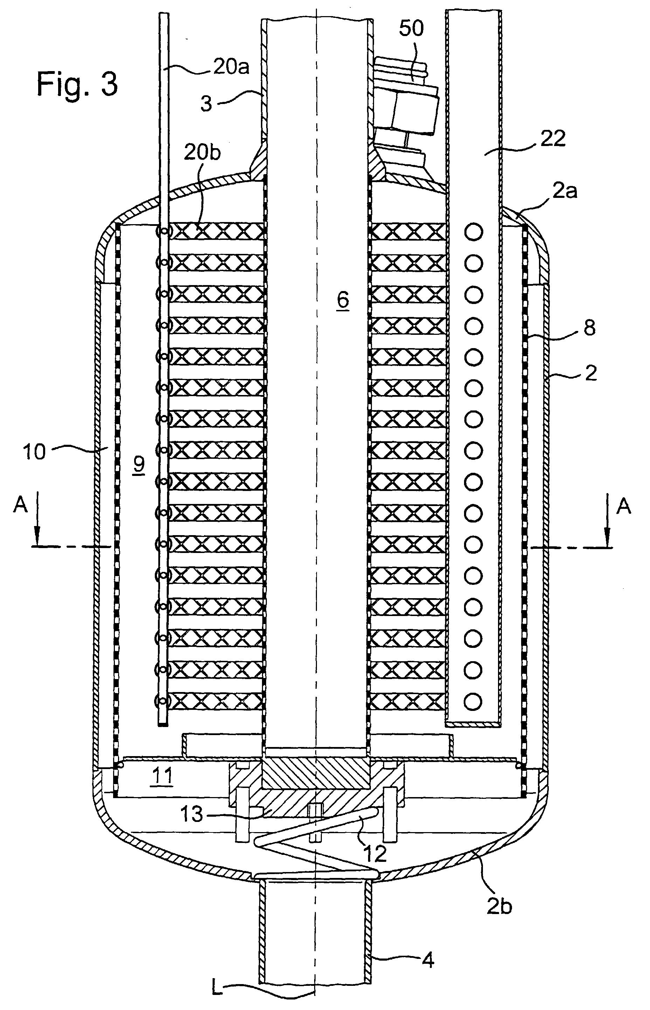

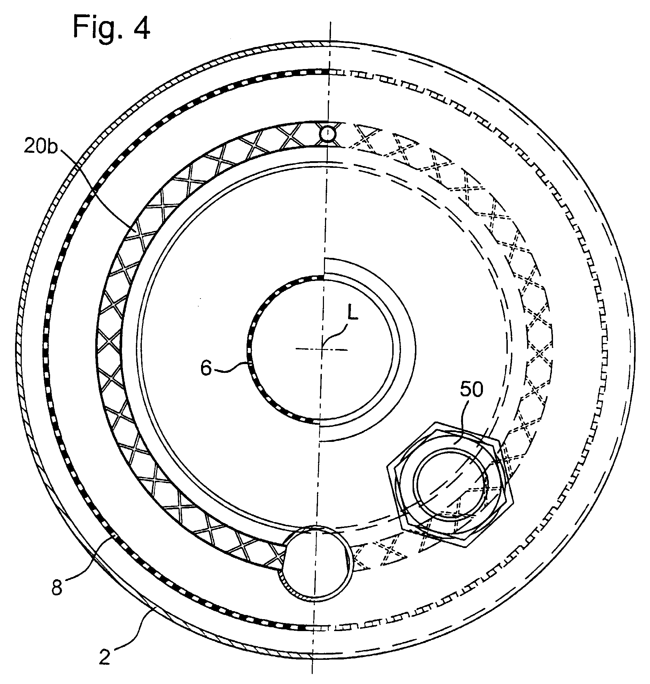

Eine weitere bevorzugte Ausführungsform des erfindungsgemäßen kombinierten Bauteils wird nun unter Bezugnahme auf die Fig. 3 und 4 erläutert. Gleiche Bauteile sind hier mit gleichen Bezugszeichen wie in den Fig. 1 und 2 bezeichnet. Auf eine erneute Beschreibung der übereinstimmenden Merkmale wird an dieser Stelle verzichtet.

In der Darstellung der Fig. 3 erkennt man, daß nur ein Eingangsrohr 20a zum Einbringen zu verdampfender Edukte in den Verdampfer vorgesehen ist. Selbstverständlich können auch zwei oder mehrere Eingangsrohre vorgesehen sein. Im Gegensatz zu den spiralförmig ausgebildeten Rohren der ersten Ausführungsform erstrecken sich die Rohre 20b gemäß der zweiten Ausführungsform im wesentlichen halbkreisförmig, parallel zueinander um das innere Rohr 6 des Abgaskatalysators und münden in dem Ausgangsrohr 22. Eine derartige parallele Anordnung der Rohre 20b erweist sich als sehr einfach herstellbar. Auch hier ist eine Erhöhung der Lebensdauer des Rohrsystems des Verdampfers gegenüber herkömmlichen Verdampfern gegeben, da die thermomechanische Beanspruchung bei der hier ausgeführten Rohrbündelbauweise kleiner als bei der herkömmlichen Plattenbauweise ist. Gegenüber herkömmlichen Plattenverdampfern weisen Rohrbündelverdampfer, wie sie gemäß der vorliegenden Erfindung eingesetzt werden, bei gleicher geforderter Druckbelastung und Verdampfungskapazität eine wesentlich geringere Masse auf.

Die erfindungsgemäßen kombinierten Bauteile erweisen sich ferner insofern als vorteilhaft, als bereits bei einem Kaltstart der Verdampfer aufgeheizt wird. Das erfindungsgemäße kombinierte Bauteil zeichnet sich ferner durch eine sehr einfache Medienführung auf. Die verwendeten Rohrleitungen, insbesondere die parallel angeordneten Rohre 20b gemäß der zweiten Ausführungsform, können in sehr preiswerter Weise durch Einsatz von Halbzeugen unter Verwendung von Standardumformverfahren zur Verfügung gestellt werden.

Im folgenden wird nun die Strömungsführung und die Funktionsweise des Abgaskatalysators beschrieben. Das Anodenabgas des Brennstoffzellensystems wird, zusammen mit einem Oxidationsmittel, vorzugsweise Luft, über den Einlaßstutzen 3 und das innere Rohre 6 koaxial zur Gehäuselängsachse in den Abgaskatalysator 1 geführt. Das innere Rohr 6 dient als Zuführungsleitung und ist vorzugsweise nicht mit Katalysatormaterial gefüllt.

Wie bereits erwähnt, ist die Mantelfläche des inneren Rohres 6 gasdurchlässig, vorzugsweise in Form eines Lochbleches, ausgeführt. Die Größe der Löcher wird so gewählt, daß eine ausreichende Zufuhr des Gasgemisches in den inneren Ringraum 9 gewährleistet wird, gleichzeitig jedoch ein Austreten von Katalysatorpartikeln in das innere Rohr verhindert wird. Von dem inneren Rohr 6 tritt nun das Gasgemisch radial in den inneren Ringraum 9 ein. Dort durchströmt das Gasgemisch den mit Katalysatormaterial gefüllten inneren Ringraum 9 weiterhin in radialer Richtung und tritt dann durch die gasdurchlässige Mantelfläche des äußeren Rohres 8 in den äußeren Ringraum 10 aus. Die Mantelfläche des äußeren Rohres ist vorzugsweise ebenfalls als Lochblech ausgebildet. Die bei der katalytischen Nachverbrennung der Abgase auftretende Wärme kann in wirksamer Weise auf die Rohrleitungen 20b, 21b, welche vollständig von Katalysatormaterial umgeben sind, übertragen werden. Eine Abführung der Abgase erfolgt über den Auslaßstutzen 4.

Aufgrund der Durchströmung des Ringraums 9 in radialer Richtung nimmt das verfügbare Volumen in Strömungsrichtung zu. Hierdurch können Druckverluste im Abgas minimal gehalten werden.

Als besonders günstig erweist sich, daß eine energetisch vorteilhafte Abstandsgestaltung zwischen dem Rohr 6 und den dieses insbesondere spiralförmig umgebenden Rohrleitungen 20b, 21b des Verdampfers gewählt werden kann: Im Bereich der Zuleitungsrohre 20a, 21a weisen die Rohre 20b, 21b einen gewissen Abstand von dem Rohr 6 auf, über welches die Abgase in die Katalysatorschüttung eingeleitet werden. Man erkennt, beispielsweise in Fig. 2, daß die Rohre 20b, 21b von den Zuleitungsrohren 20a, 21a relativ nah an das Rohr 6 herangeführt werden, um dann schließlich in dem Auslaßrohr 22 zu münden, welches wiederum einen relativ großen Abstand von dem Rohr 6 aufweist.

In unmittelbarer Umgebung des Rohres 6 steht die meiste Energie zur Verfügung, da beim Eintritt der Abgase in die Katalysatorschüttung die maximale Brennstoffkonzentration und damit auch der höchste Umsatz vorliegt.

Insgesamt werden durch die beschriebene Führung der Rohre 20b, 21b die zu verdampfenden Medien zunächst im Bereich mittlerer Wärme vorgeheizt (relativ großer Abstand zum Rohr 6 in der Umgebung der Zuleitungen 20a, 21a), anschließend im Bereich größter Energie verdampft (in unmittelbarer Nähe des Rohres 6), und schließlich wieder im Bereich mittlerer Energie (Umgebung des Auslaßrohres 22) überhitzt.

Durch die Anordnung zweier Einlaßrohre 20a, 21a und eines gemeinsamen Auslaßrohres 22, wie es in Fig. 2 dargestellt ist, kann beispielsweise eine optimale Lastanpassung (mittels Ventilen) durchgeführt werden.

Unter Bezugnahme auf die Ausführungsform der Fig. 1 und 2 ist es insbesondere möglich, über eines der Einlaßrohre 20a Wasser, und das andere Einlaßrohr 21a Methanol zuzuführen, wobei erst im Auslaßrohr 22 das Wasserdampf/Methanol-Gemisch entsteht.

Die in den Fig. 3 und 4 dargestellte Ausführungsform des erfindungsgemäßen Bauteils zeichnet sich insbesondere dadurch aus, daß durch die konkrete Formgebung der halbkreisförmigen Rohre 20b eine Anpassung des spezifischen Wärmeeintrags an den Verdampfungsprozeß erfolgen kann, d.h. Bereiche mit hohem Wärmebedarf sind an Orten mit großem Energieangebot angeordnet.

Gemäß der oben beschriebenen Ausführungsform ist eine katalytische Schüttung in dem Katalysator 1a vorgesehen. Es wurde erwähnt, daß zusätzlich zu dieser Schüttung mit katalytischem Material beschichtete Rohre vorteilhaft verwendbar sind. Es sei angemerkt, daß die erfindungsgemäß zu erzielende katalytische Wirkung auf beliebige Art erzielbar ist, beispielsweise ausschließlich mit katalytisch beschichteten Rohren, wie sie bereits beschrieben wurden, oder durch die erwähnte Kombination einer Schüttung mit beschichteten Rohren. Die Außenwandungen der Rohre können hierbei auch als beschichtetes Vlies ausgebildet sein bzw. von einem derartigen Vlies überdeckt werden. Auch weitere, hier nicht im einzelnen dargestellte katalytische Komponenten bzw. Maßnahmen sind wählbar.

## Patentansprüche

1. Kombiniertes Bauteil zur Nachverbrennung von Anodenabgasen eines Brennstoffzellensystems und zum Verdampfen von dem Brennstoffzellensystem zuzuführenden Edukten, mit einem Abgaskatalysator (1b) zur Nachverbrennung der Anodenabgase mit einem im wesentlichen zylinderförmigen Gehäuse (2), mit jeweils einem auf einem Gehäusedeckel (2a) bzw. einem Gehäuseboden (2b) angeordneten Einlaß- bzw. Auslaßstutzen (3,4), mit einem ersten, koaxial zur Gehäuselängsachse angeordneten, gasdurchlässigen inneren Rohr, welches auf der Gaseinlaßseite fest mit dem Gehäusedeckel (2a) verbunden ist, mit einem zweiten, koaxial zur Gehäuselängsachse angeordneten gasdurchlässigen äußeren Rohr (8), welches einen Radius (r_{A}) größer als der Radius (r_{I}) des inneren Rohres (6), jedoch kleiner als der Radius (r_{G}) des Gehäuses aufweist, und welches auf der Einlaßseite gasdicht mit dem Gehäusedeckel verbunden ist, und mit einem Katalysatormaterial im Bereich zwischen dem inneren und dem äußeren Rohr (6, 8) zur katalytischen Oxidation des Anodenabgases,
**dadurch gekennzeichnet,**
daß in dem Bereich (9) zwischen dem inneren Rohr (6) und dem äußeren Rohr (8) ein Verdampfer zum Verdampfen wenigstens eines dem Brennstoffzellensystems zuzuführenden Eduktes vorgesehen ist, wobei Rohre (20b, 21b) des Verdampfers, durch welche das zu verdampfende Edukt strömt, um das innere Rohr (6) des Abgaskatalysators herumgeführt sind.

2. Bauteil nach Anspruch 1, dadurch gekennzeichnet, daß die Rohre (20b, 21b) das innere Rohr (6) wenigstens einmal umgebend im wesentlichen spiralförmig ausgebildet sind, wobei die zuzuführenden Edukte über wenigstens ein mit den Rohren (21b) kommunizierendes Einlaßrohr (20a, 20b), und die verdampften Edukte über ein mit den Rohren (21b) kommunizierendes Auslaßrohr (22) verbunden sind.

3. Bauteil nach Anspruch 1, dadurch gekennzeichnet, daß die Rohre (20b, 21b) des Verdampfers im wesentlichen als parallel zueinander verlaufende, das innere Rohr (6) im wesentlichen halbkreisförmig umgebende Rohre (21b) ausgebildet sind, wobei die zuzuführenden Edukte über wenigstens ein mit den Rohren (21b) kommunizierendes Einlaßrohr (20a, 20b), und die verdampften Edukte über ein mit den Rohren (21b) kommunizierendes Auslaßrohr (22) verbunden sind.

4. Bauteil nach einem der vorstehenden Ansprüche, dadurch gekennzeichnet, daß die Rohre (20b, 21b) Bereiche mit verringertem Querschnitt aufweisen.

5. Bauteil nach Anspruch 4, gekennzeichnet durch in die Rohre (20b, 21b) eingebrachte Einlagen (25) zur Schaffung von Bereichen mit verringertem Querschnitt.

6. Bauteil nach einem der vorstehenden Ansprüche, dadurch gekennzeichnet, daß die Innenwandungen und/oder die Außenwandungen der Rohre (20b, 21b) strukturiert ausgebildet sind.

7. Bauteil nach einem der vorstehenden Ansprüche, dadurch gekennzeichnet, daß die Außenwandungen der Rohre katalytisch beschichtet ausgebildet sind, oder ein katalytisch beschichtetes Vlies aufweisen.
